# DEMANDE DE BREVET EUROPEEN

(11) **EP 0 737 435 A1**
(43) Date de publication de la demande: **16.10.1996**
(21) Numéro de dépôt: 96400751.2
(22) Date de dépôt: 05.04.1996
(51) Int. Cl.: A47J 36/08

(54) **Récipient culinaire avec couvercle présentant une fonction de versage**

(30) Priorité: 11.04.1995 FR 9504322
(71) Demandeur: SEB S.A., F-69130 Ecully (FR)
(72) Inventeur: Raoult, Philippe, 74370 Pringy (FR)
(74) Mandataire: Keib, Gérard

(57) **Abrégé**

Le récipient culinaire (1) comprend une queue ou des anses de préhension et un couvercle (3) comportant une bordure périphérique (4) reposant de façon sensiblement étanche sur le bord supérieur (5) du récipient.

La surface interne (6) du couvercle (3) comporte au moins une cavité (7) ménagée entre ladite bordure périphérique (4) et une butée (8) faisant saillie vers l'intérieur du récipient, ledit couvercle (3) pouvant lors de l'inclinaison du récipient (1) se déplacer par gravité sur le bord supérieur (5) du récipient (1) vers une position dans laquelle, ladite cavité (7) est située au moins en partie à l'extérieur du bord supérieur (5) du récipient, tandis que ladite butée (8) peut prendre appui contre ledit bord supérieur (5) du récipient pour limiter le déplacement du couvercle (3) vers l'extérieur.

## Description

La présente invention concerne un récipient culinaire comprenant une queue ou des anses de préhension et un couvercle comportant une bordure périphérique reposant de façon sensiblement étanche sur le bord supérieur du récipient.

L'invention vise en particulier les casseroles et les faitouts destinés à la cuisson d'un liquide renfermant des aliments tels que riz, pâtes, légumes etc...

Lors de la cuisson, la bordure périphérique repose de façon sensiblement étanche sur le bord supérieur du récipient. Après la cuisson, on verse le liquide (en général de l'eau).

A cet effet, on incline le récipient et on retire légèrement le couvercle dans un direction opposée à l'inclinaison du récipient c'est-à-dire à l'opposé du déplacement par gravité du couvercle pour créer entre le couvercle et le bord du récipient une petite ouverture suffisante pour l'écoulement du liquide, mais empêchant le passage des aliments.

Cette façon de procéder n'est pas très commode, nécessite une certaine adresse et ne permet pas de filtrer efficacement les aliments.

On connaît ainsi dans le document WO93/20738 un couvercle qui est déplacé dans une direction opposée à l'inclinaison du récipient ce qui oblige l'utilisateur à positionner le couvercle sur le bord du récipient avant d'incliner ce dernier.

Le but de la présente invention est de remédier à ces inconvénients.

L'invention vise ainsi un récipient culinaire comprenant une queue ou des anses de préhension et un couvercle comportant une bordure périphérique reposant de façon sensiblement étanche sur le bord supérieur du récipient.

Suivant l'invention, ce récipient est caractérisé en ce que la surface interne du couvercle comporte au moins une cavité ménagée entre ladite bordure périphérique et une butée faisant saillie vers l'intérieur du récipient, ledit couvercle pouvant lors de l'inclinaison du récipient se déplacer par gravité sur le bord supérieur du récipient vers une position dans laquelle ladite cavité est située au moins en partie à l'extérieur du bord supérieur du récipient, une ouverture de passage étant créée entre le bord supérieur du récipient et la cavité, tandis que ladite butée peut prendre appui contre ledit bord supérieur du récipient pour limiter le déplacement du couvercle vers l'extérieur.

Ainsi, en inclinant le récipient, le couvercle peut se déplacer par gravité dans le sens de l'inclinaison, de sorte que la cavité ménagée sur la surface interne du couvercle crée une ouverture de passage du liquide entre le bord supérieur du récipient et le couvercle, la butée également ménagée sur la surface intérieure du couvercle limitant le déplacement de ce dernier.

La cavité ci-dessus crée une ouverture ayant une dimension prédéterminée et par conséquent optimale pour le versage.

A l'opposé de ladite cavité se crée du fait du déplacement par gravité, une autre ouverture entre le couvercle et le bord du récipient permettant l'entrée de l'air à l'intérieur du récipient qui favorise l'écoulement du liquide.

Selon une version préférée, la surface interne du couvercle comporte deux cavités diamétralement opposées situées sensiblement à 90° de la queue ou de chaque anse du récipient.

Ces deux cavités permettent ainsi le versage suivant deux inclinaisons différentes et opposées du récipient.

De préférence la ou les cavités présentent un fond dont le profil est courbe.

Grâce à ce profil courbe des cavités, l'écoulement du liquide s'effectue dans des conditions optimales.

Selon une autre particularité de l'invention la ou les cavités comportent une série de picots faisant saillie vers l'intérieur du récipient et assurant une fonction de filtrage.

Ces picots empêchent ainsi lors du versage le passage des aliments tels que riz, pâtes, légumes, etc...La distance entre les picots peut d'ailleurs être réglée en fonction des dimensions des aliments.

D'autres particularités et avantages de l'invention apparaîtront encore dans la description ci-après.

Aux dessins annexés, donnés à titre d'exemples non limitatifs :
- la figure 1 est une vue en coupe partielle d'un récipient selon l'invention et de son couvercle en position sur le bord supérieur de ce récipient,
- la figure 2 est une vue analogue à la figure 1, la coupe étant située à 90° de celle de la figure 1,
- la figure 3 est une vue en plan de la surface interne du couvercle,
- la figure 4 est une vue analogue à la figure 2, le récipient étant incliné et le couvercle ayant été déplacé dans le sens de la gravité.

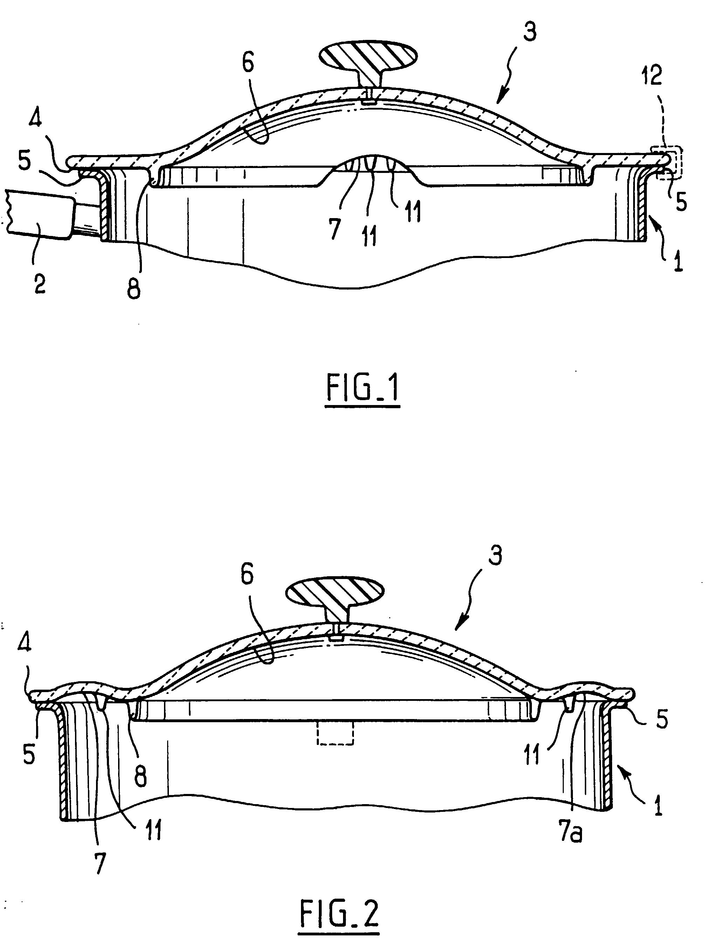

Le récipient culinaire 1 représenté sur la figure 1 comprend une queue 2 et un couvercle 3 comportant une bordure périphérique 4 reposant de façon sensiblement étanche sur le bord supérieur 5 du récipient 1.

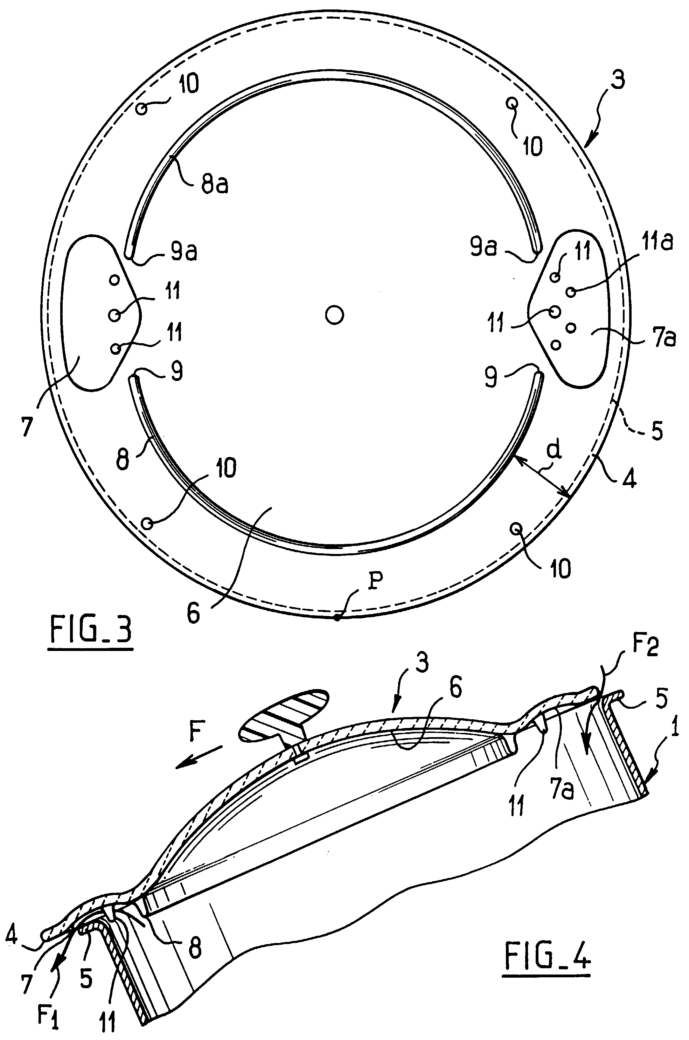

Conformément à l'invention, la surface interne 6 du couvercle 3 comporte au moins (voir figures 1, 2, 3 et 4) une cavité 7 ménagée entre le bordure périphérique 4 et une butée 8 faisant saillie vers l'intérieur du récipient.Comme indiqué sur la figure 4, le couvercle 3 peut lors de l'inclinaison du récipient 1 se déplacer par gravité sur le bord supérieur 5 du récipient 1 vers une position dans laquelle, la cavité 7 est située au moins en partie à l'extérieur du bord supérieur 5 du récipient 1, tandis que la butée 8 peut prendre appui contre la paroi intérieure 5 du récipient 1 pour limiter le déplacement du couvercle 3 vers l'extérieur.

Dans l'exemple représenté sur les figures annexées, la surface interne 6 du couvercle 3 comporte deux cavités diamétralement opposées 7, 7a situées sensiblement à 90° de la queue 2.

Les figures 2 et 4 montrent par ailleurs que les cavités 7, 7a présentent un fond dont le profil est courbe.

On voit d'autre part sur la figure 3 que la butée 8 est constituée par deux saillies 8, 8a en forme d'arcs symétriques par rapport aux deux cavités diamétralement opposées 7, 7a. Les extrémités 9, 9a de ces deux saillies sont situées de part et d'autre de chaque cavité 7, 7a, de sorte que les butées 8, 8a sont interrompues en regard des cavités 7, 7a.

La figure 3 montre d'autre part, que la distance d entre chaque saillie 8, 8a et le bord extérieur 4 du couvercle augmente progressivement entre une position P située à 90° de chaque cavité 7, 7a et une position 9, 9a située près de chaque cavité 7, 7a. Cette disposition permet un déplacement du couvercle 3 plus important dans la direction des cavités 7, 7a.

Comme montré par la figure 3, le couvercle 3 comporte sur surface intérieure 6 près de son bord extérieur 4, des picots 10 faisant saillie vers l'intérieur et coopérant avec le bord supérieur 5 (représenté en pointillés sur la figure 3) du récipient 1 pour centrer le couvercle 3 par rapport à ce bord supérieur 5.

Par ailleurs, les cavités 7, 7a comportent une série de picots 11, 11a faisant saillie vers l'intérieur du récipient et assurant une fonction de filtrage lors du versage.

Dans l'exemple représenté les deux cavités diamétralement opposées 7, 7a comportent des picots 11, 11a dont l'emplacement et la dimension sont différents d'une cavité 7, 7a à l'autre, ce qui permet de filtrer des aliments de dimensions différentes.

Dans l'exemple représenté, le couvercle 3 est moulé en verre ou en matière plastique.

Les cavités 7, 7a, butées 8, 8a et picots 10, 11, 11a sont réalisés lors du moulage du couvercle 3.

Bien entendu, le couvercle peut également être en métal embouti. Dans ce cas, les cavités, butées et picots ci-dessus sont réalisés lors de l'emboutissage du couvercle ou par adjonction d'une pièce supplémentaire en métal ou en plastique.

Pour utiliser la casserole que l'on vient de décrire, on procède comme suit.

Lors de la cuisson, le couvercle 3 est parfaitement centré sur le bord 5 du récipient 1 grâce aux picots 10 et il repose de façon sensiblement étanche sur ce bord 5, comme montré par les figures 1 et 2.

Pour verser le liquide contenu dans la casserole, on l'incline comme indiqué sur la figure 4, l'utilisateur tenant la queue 2 avec l'une de ses mains. Avec son autre main l'utilisateur pousse le couvercle 3 dans le sens F de la gravité. Lors du déplacement du couvercle 3, les deux picots 10 de centrage, les plus proches de la cavité 7 passent au-dessus du bord 5 du récipient 1.

La cavité 7 chevauche alors le bord 5 du récipient, ce qui crée une ouverture de passage (voir flèche F1) entre le bord 5 du récipient et le couvercle, permettant l'écoulement du liquide. Une autre ouverture (voir flèche F2) est créée à l'opposé de la cavité 7 permettant une entrée d'air dans le récipient ce qui favorise l'écoulement du liquide.

Un déplacement plus important du couvercle 3 dans le sens de la gravité est empêché par les butées 8, 8a.

Les picots 11, 11a jouent le rôle de filtre. Dans l'exemple représenté sur la figure 3, une filtration plus importante (adaptée à des aliments plus fins) est obtenue lorsqu'on incline la casserole dans le sens de la cavité 7a, du fait que les picots 11, 11a sont plus rapprochés et plus nombreux que ceux de la cavité 7.

Le déplacement du couvercle 3 lors de l'inclinaison de la casserole pourrait être guidé par un rebord 12 (représenté en pointillé sur la figure 1) ménagé sur le bord du couvercle 3 à l'opposé de la queue 2 et venant en prise sous le bord 5 du récipient. Dans ce cas, l'utilisateur pourrait réaliser le versage d'une seule main sans tenir le couvercle 3.

## Revendications

1. Récipient culinaire (1) comprenant une queue (2) ou des anses de préhension et un couvercle (3) comportant une bordure périphérique (4) reposant de façon sensiblement étanche sur le bord supérieur (5) du récipient, caractérisé en ce que la surface interne (6) du couvercle (3) comporte au moins une cavité (7) ménagée entre ladite bordure périphérique (4) et une butée (8) faisant saillie vers l'intérieur du récipient, ledit couvercle (3) pouvant lors de l'inclinaison du récipient (1) se déplacer par gravité sur le bord supérieur (5) du récipient (1) vers une position dans laquelle ladite cavité (7) est située au moins en partie à l'extérieur du bord supérieur (5) du récipient, une ouverture de passage étant créée entre le bord supérieur (5) du récipient et la cavité (7), tandis que ladite butée (8) peut prendre appui contre ledit bord supérieur (5) du récipient pour limiter le déplacement du couvercle (3) vers l'extérieur.

2. Récipient conforme à la revendication 1, caractérisé en ce que la surface interne (6) du couvercle (3) comporte deux cavités (7, 7a) diamétralement opposées situées sensiblement à 90 de la queue (2) ou de chaque anse du récipient.

3. Récipient conforme à l'une des revendications 1 ou 2, caractérisé en ce que la ou les cavités (7, 7a) présentent un fond dont le profil est courbe.

4. Récipient conforme à l'une des revendications 2 ou 3, caractérisé en ce que ladite butée (8) est constituée par deux saillies (8, 8a) en forme d'arcs symétriques par rapport aux deux cavités diamétralement opposées (7, 7a), les extrémités de ces deux saillies (8, 8a) étant situées de part et d'autre de chaque cavité (7, 7a).

5. Récipient conforme à la revendication 4, caractérisé en ce que la distance (d) entre chaque saillie (8, 8a) et le bord extérieur (4) du couvercle augmente progressivement entre une position (P) située à 90 de chaque cavité (7, 7a) et une position située près de chaque cavité.

6. Récipient conforme à l'une des revendications 1 à 5, caractérisé en ce que le couvercle (3) comporte sur sa surface intérieure (6) près de son bord extérieur (4) des picots (10) faisant saillie vers l'intérieur et coopérant avec le bord supérieur (5) du récipient pour centrer le couvercle (3) par rapport audit bord supérieur (5).

7. Récipient conforme à l'une des revendications 1 à 6, caractérisé en ce que la ou les cavités (7, 7a) comportent une série de picots (11, 11a) faisant saillie vers l'intérieur du récipient (1) et assurant une fonction de filtrage.

8. Récipient conforme à l'une des revendications 2 à 7, caractérisé en ce que les deux cavités diamétralement opposées (7, 7a) comportent des picots (11, 11a) dont l'espacement est différent d'une cavité à l'autre.

9. Récipient conforme à l'une des revendications 1 à 8, caractérisé en ce que le couvercle (3) est moulé en verre ou en matière plastique, la ou les cavités (7, 7a), butées (8, 8a) et/ou picots (10, 11,11a) étant réalisés lors du moulage du couvercle.

10. Récipient conforme à l'une des revendications 1 à 8, caractérisé en ce que le couvercle est en métal embouti, la ou les cavités, butées et/ou picots étant réalisés lors de l'emboutissage du couvercle.
